# EUROPEAN PATENT SPECIFICATION

(11) **EP 3 267 805 B1**
(45) Date of publication and mention of the grant of the patent: **08.05.2019**
(21) Application number: 15738141.9
(22) Date of filing: 10.03.2015
(51) Int. Cl.: A23L 3/015

(54) **METHOD FOR PROCESSING A FOOD PRODUCT AND CORRESPONDING PROCESSING APPARATUS**
VERFAHREN ZUR VERARBEITUNG EINES LEBENSMITTELPRODUKTS UND ENTSPRECHENDE VERARBEITUNGSVORRICHTUNG
PROCÉDÉ DE TRANSFORMATION DE PRODUIT ALIMENTAIRE ET APPAREIL DE TRANSFORMATION CORRESPONDANT

(43) Date of publication of application: 17.01.2018
(73) Proprietor: Villa Food S.r.l., 33029 Villa Santina (UD) (IT)
(72) Inventor: GREATTI, Denis, 33050 Pozzuolo del Friuli (IT); ZANINI, Ugo, 33030 Buja (UD) (IT)
(74) Representative: Petraz, Gilberto Luigi
(86) International application number: PCT/IT2015/000063
(87) International publication number: WO 2016/142957

(56) References cited:
- WO-A2-03/013279
- WO-A2-2015/016458
- CN-A- 102 648 742
- DE-A1- 10 033 733
- US-A- 6 033 701
- US-A1- 2004 191 382
- HURTADO J L ET AL: "EXTENSION OF SHELF LIFE OF CHILLED HAKE (MERLUCCIUS CAPENSIS) BY HIGH PRESSURE", FOOD SCIENCE AND TECHNOLOGY INTERNATIONAL, SAGE PUBLICATIONS, NEW YORK, NY, US, vol. 6, no. 3, 1 January 2000 (2000-01-01) , pages 243-249, XP008012314, ISSN: 1082-0132, DOI: 10.1177/108201320000600307

## Description

### FIELD OF THE INVENTION

The present invention concerns a method and an apparatus for processing a food product.

In particular, the present invention concerns a method and a corresponding apparatus for processing a food product both intended for the production of ready-made food products, to be sold in shops, supermarkets, shopping malls, bars or other type of premises used for the sale of such products.

### BACKGROUND OF THE INVENTION

Due to numerous cultural, organizational and work factors, nowadays life is rather frantic and hurried.

This frenzy of contemporary society means that less time is dedicated to food. Indeed, on the counters of supermarkets and the menus on offer in hotels, restaurants, trattorias or bars there is a great increase in fast food, easy to prepare and to serve.

A growing demand for such foods has led many food producers in the sector to increase the range and supply of gastronomical pre-packed foods.

Indeed, there are more and more bars serving customers pre-packed, already cooked foods which only need heating up or "regenerated" as the jargon goes, ready to eat, considerably limiting the service times.

It has been calculated that from the moment the customer (clerk, workman, traveler) enters the premises, sits down and orders, he/she is served within five minutes, while consumption of the dish takes on average ten minutes, and so within about twenty minutes the customer is in and out.

It is very convenient for the manager of the eatery to use these commercial products since they avoid many expenses such as:
- managing specialized staff to prepare dishes;
- cost of waste in preparation;
- cost of waste of products that can no longer be sold.
Moreover, the manager of the eatery enjoys many advantages such as:
limited preparation times;
- use of low cost equipment or utensils for the possible regeneration of the food,
- almost complete elimination of waste, since only what is ordered is made ready to eat,
- greater food-hygiene safety.

The dishes that are often offered, above all in eateries such as bars or snack bars, are toasted sandwiches, snacks or salads.

To manage a service more like a restaurant, frozen products are used (frozen lasagna, pre-cooked vegetables for example). Products of this type do not have a balanced calorie or dietary contribution, since they are without nutritive properties necessary for our daily quota, they have too many fats and often are not good. Moreover, these pre-packed products must guarantee a certain length in terms of shelf life, which is ensured by using different strategies such as the adoption of physical strategies, such as managing a cold chain, refrigeration or freezing, or using chemical products such as additives or adjuvants.

These strategies allow to increase the life of the product, giving advantages from the point of view of food safety and appeal and taste of the product, but to the detriment of the consumer's health. It is widely agreed that these numerous food products on the one hand ensure food safety, preventing possible illnesses (intoxication, toxic infections or infections), but on the other hand they can, in the long term, cause imbalances in the human body, because of the accumulation of many additives or ingredients.

Consumers and managers of eateries therefore request, more and more often, packed foods that are easy to prepare, without preservatives, which respect nutritional, dietary and biological values and which have medium-to-long use-by-dates.

These aspects can clearly be traced back to an increasing tendency for more genuine products.

The food companies find considerable obstacles in meeting all these requests to ensure a healthy and genuine product from the point of view of hygiene, health and nutrition.

For this reason some consumers are diffident in buying ready-made food products since they may not be genuine and can cause damage to one's health.

There is therefore a need to supply food products that are easy to prepare, that do not contain preservatives, that respect nutritional, dietary and biological values and have medium-to-long use-by dates.

One purpose of the present invention is to achieve a method and an apparatus for processing a food product, both intended to obtain a food product ready and to be regenerated, that has a long shelf life, is highly appealing and appetizing, that does not use additives such as preservatives or flavor enhancers, that respects nutritional, biological and dietary values, that is easy to prepare and/or serve and that ensures a high level of food safety and hygiene.

It is also a purpose of the present invention to perfect a method and an apparatus for processing a food product that allows to produce pre-packed gastronomic specialties with no additives or adjuvants, ensuring a long shelf life without necessarily resorting to freezing the food product but maintaining it under cold chain conditions.

The Applicant has devised, tested and embodied the present invention to overcome the shortcomings of the state of the art and to obtain these and other purposes and advantages.

Several patent documents, like US 2004/191382, CN 102 648 742 and WO 03/013279, disclose methods and apparatuses useful in obtaining such products.

### SUMMARY OF THE INVENTION

The present invention is set forth and characterized in the independent claims, while the dependent claims describe other characteristics of the invention or variants to the main inventive idea.

In accordance with the above purposes, a method for processing food products and the corresponding apparatus have been designed as in the appended claims.

The sequence of the above steps allows to obtain a food product that has a long shelf life, is very appealing and appetizing, does not use additives such as preservatives or flavor enhancers, respects nutritional, biological and dietary values, is easy to prepare and/or serve and has high food-hygiene safety.

### BRIEF DESCRIPTION OF THE DRAWINGS

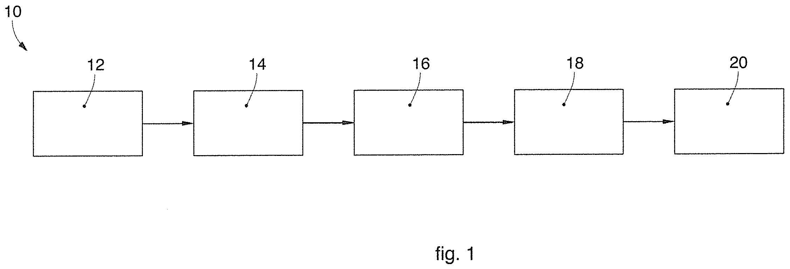

These and other characteristics of the present invention will become apparent from the following description of some forms of embodiment, given as a non-restrictive example with reference to fig. 1 which shows a block diagram of steps of the method for processing a food product.

### DETAILED DESCRIPTION OF SOME FORMS OF EMBODIMENT

The present invention concerns a method and an apparatus for processing a food product intended for the production of a ready-made food product, to be sold in shops, supermarkets, shopping malls, bars or other type of eatery used for the sale of such products.

By ready-made food products we intend to include food products, packaged and already pre-cooked, that require a much reduced regeneration and/or preparation time and are easy and convenient to regenerate and/or prepare for almost immediate consumption.

According to the present invention, the method 10 comprises a step 12 of preparing a food product during which one or more raw materials, which make up the food product to be obtained, are worked.

In accordance with a possible form of embodiment, the preparation step 12 of the food product can be carried out in a preparation station.

The preparation step 12, depending on the raw material processed, can comprise at least one of cutting, pre-cooking, sectioning, weighing the raw material or other operations that persons of skill provide in order to obtain a semi-worked product possibly already ready for immediate consumption.

The preparation step 12 can be obtained starting from fresh raw materials or materials that have undergone specific working processes.

In accordance with possible forms of embodiment, the equipment used for the preparation step 12 can respect specifications dictated by the main norms of the food sector (for example in Europe, norms 852/04, 853/04 and 81/2008) in terms of cleanliness, healthiness and safety. The personnel employed have a high level of training that includes the sanitary hygiene needs concerning handling of said products.

In accordance with the present invention, the method 10 also comprises a cooking step 14 during which the food product previously processed during the preceding preparation step 12 is cooked in vacuum mode.

According to a form of embodiment of the present invention, the cooking step 14 can be carried out in a cooking station.

The cooking step 14 in vacuum mode, also called "sous vide" is also known as cooking at low temperature.

Before the cooking step 14 an operation can be provided to introduce the food product into a container functional to the subsequent cooking step 14.

The container can be defined by an airtight bag approved for cooking.

In this introduction operation, the container with the food product is hermetically sealed and air is extracted from it in order to create a physical condition of depression.

In accordance with a possible form of embodiment of the present invention, during the cooking step 14 the food product is kept in a vacuum condition comprised between 0.2bar and 0.5bar.

After the introduction of the food product into the container, the cooking step 14 can include a cooking operation proper, carried out in either a convection steam oven or a Roner.

The convection steam oven provides that inside a cooking chamber steam is conveyed, through fans, that can reach a temperature of more than 100°C.

The Roner is an instrument equipped with a resistance, a thermostat and a fan. Once the resistance is immersed in a receptacle full of water, the temperature is set by the thermostat and the water is heated; when this has reached a pre-fixed temperature, the container with the food product is immersed therein and one proceeds with the cooking.

Independently of the cooking instruments indicated above, each food product developed to be cooked in vacuum mode needs its own times and temperatures, pre-fixed and determined on each occasion on the basis of the specific food formulations of the food product.

The cooking modes and parameters must be suitably chosen to improve, both the qualitative aspects (microbiological, shelf life, transfers, texture) and the quantitative aspects (weight loss, labels) of the food product.

The cooking step 14 in vacuum mode allows to safeguard to the utmost the freshness, the intensity of aromas, the texture, the taste and the maximum healthiness and safety of the food product, guaranteeing that a food product is obtained that is qualitatively superior in which the preparation is safeguarded from possible sanitary and hygiene damage.

The vacuum cooking mode allows to obtain all the above listed objectives with extreme safety, thanks to the fact that:
- the vacuum allows to better preserve the food product; indeed, removing the air and preserving a food product in a hermetic container, allows to eliminate damage from pests (e.g. insects or rodents) and allows to eliminate damage of 50% of the micro-organisms that live only where there is oxygen (e.g. fungi, yeast, and aerobe bacteria),
- with the vacuum cooking technique, moreover, the process can be considered as a "cooking-pasteurization" process: all the bacteria, even anaerobic ones (that live without air) present in the container, are killed during cooking. This is the decisive aspect of the vacuum cooking step 14 to increase shell life.

Another extremely important aspect obtained during the above cooking step, is the high quality and freshness of the foods, not obtainable with traditional cooking methods during which the products lose their nutritive properties to bring to our dietary needs, since the food is deprived of a great deal of vitamins (because of the high cooking temperature) that are destroyed by heat.

With vacuum cooking, based on low temperatures, a large part of the vitamins which have not been denatured and therefore lost are preserved, the aromas, or more properly the flavors are safeguarded which, trapped in the hermetic container cannot exit and therefore, with this system, the product is full of flavor.

Moreover, with the vacuum cooking mode, salt, spices and herbs are less intense with respect to traditional preparations, giving the food the right amount of tastiness with attention paid to the amounts used, therefore respecting dietary rules. This aspect is fundamental not only for healthy people, but above all for those forced to follow low sodium diets (those with hypertension, nephropathy).

During the vacuum mode cooking step 14, the food product also undergoes a pasteurization.

The pasteurization can be obtained by imparting a heating to the food product based on heating curves whose development determines the penetration of the heat into the food product subjected to treatment.

Merely by way of example, the cooking step 14 can provide reference heat treatments at 71°C for 30 minutes (calculated in Z 5) that is equivalent to a pasteurization process on the microbial load and value suitable for storing the products at 4°C. Or at 90°C for 10 minutes (calculated in Z 10) that is equivalent to a pasteurization process on the pathogen microbial load (*C*. *Botulinum*) value suitable for storing between 0 and 10°C.

These heat treatments ensure that the product can be sold in complete safety and does not cause any harm to the final consumer.

The vacuum cooking method allows to obtain at least the following advantages:
- extension of the preservability of food products;
- reduction of up to 40% of condiments and fatty materials;
- reduction of the waste caused by drying, in the cooking and storage steps, on the surfaces of meats, fish, doughs, vegetables, etc.;
- the yield of food products is much higher than in the classic method (about 60% more) with consequent reduction in production costs: a lower drop in weight of the food product cooked in vacuum mode compared to the traditional mode, is equivalent to a lowering of costs;
- increase in flavor since the food is cooked in vacuum mode and the flavors and aromas are not lost;
- improvement of the visual appearance thanks to cooking at low temperature: the color of the food product remains the same since there is no oxidation, particularly in vegetables with chlorophyll (which is inactivated at 108°C) which remain a natural green and not a faded yellow;
- optimization of portions;
- increase in yield, given that in order to be able to extend the preservation of the food for as long as possible, food purchases will be mainly oriented toward seasonal products, in order to ensure the best quality from a nutritional point of view, at the same time obtaining the economic advantage determined by considerably lower prices thanks to a greater availability of the products on the market;
- reduction in energy consumption due to the use of lower cooking temperatures compared to traditional ones;
- planning of production as a function of the extended time for the preservation of the products;
- rationalization of the use of cold stores with the possibility of reducing their number.

In accordance with the present invention the method 10 comprises a cold pasteurization step 18 during which the food product is subjected to a pressure of at least 3,000bar.

In accordance with possible solutions, the cold pasteurization step 18 can provide to take the food product to a pressure of about 6,000bar.

Merely by way of example, the cold pasteurization step 18 can last a few minutes, for example from five to ten minutes.

In accordance with the invention, during the cold pasteurization step 18 it is provided that the food product does not exceed a temperature near to room temperature.

The cold pasteurization step 18 has the function of irreversibly damaging the microbial cells present in the food products and stabilizing microbiologically both solid and liquid foods.

The high pressures reached in the food product during the cold pasteurization step 18 allow the destruction of the micro-organisms and/or favorable modifications to the texture of the food, which maintains at the same time all its nutritional and organoleptic characteristics thanks to the absence of thermal deterioration. The food product will thus have a fresher aroma and flavor compared with the same food subjected to heat pasteurization.

The cold pasteurization step 18 can provide for example to insert the food product in a chamber resistant to high pressures, and to induce in the latter a high pressure suitable to crush and completely eliminate any possible bacterial vegetative form present therein.

In accordance with possible solutions, the high-pressure cold pasteurization step 18 can also be used for foods such as fruit juices, milk and dairy products, meat, fish and wine products etc.

According to one form of embodiment of the present invention, the cold pasteurization step 18 can be carried out in a pasteurization station.

The cold pasteurization step 18 comprises a propaedeutic operation of inserting the food product in a container for its pasteurization, for example a bag, a tray or other.

In accordance with the present invention, the method comprises a packing step 16 during which the food product is packed in a pack.

The pack can comprise at least one of either a bag, a plastic wrapper, a tray, or similar or comparable packs.

The pack can have different formats, for example single portion or multi portion, depending on the particular distribution requirements.

The packing step 16 can be done in a packing station and the latter can be equipped to this purpose at least with a heat packer machine.

According to possible solutions, the heat packer machine can be the Skin type, that is, configured to generate a vacuum pack in a tray in which an upper layer of cling film is made to adhere to the product, as if it were a second skin.

In accordance with another aspect of the present invention, the packs can all be made of plastic material and therefore the waste deriving therefrom is homogeneous, facilitating the process of disposal and recycling.

In accordance with other forms of embodiment of the present invention, the packs are suitable for microwaves, which makes them particularly suitable for the regeneration process of the food product before serving it to a customer.

In accordance with a possible variant form of embodiment, the packing step 16 can be carried out before the cooking step 14. In this way the container used for the cooking step 14 is the same as that then used for the subsequent cold pasteurization step 18 and defines the pack which subsequently the food product is supplied to the distribution chain.

In accordance with another variant form of embodiment of the present invention, the packing step can be carried out before the cold pasteurization step 18 and after the cooking step 14.

In this case, after cooking, the food product is removed from the container inside which it has been cooked and introduced into the pack that is functional both for the cold pasteurization step 18 and the subsequent preservation of the food product before its consumption.

In accordance with another variant form of embodiment of the invention, the packing step 16 is carried out after the cooking step 14 and after the cold pasteurization step 18.

In this case the pack in which the food product is inserted is particularly suitable for the subsequent steps of preservation, transport and introduction onto the market of the food product.

For example, the pack can include indications as to the ingredients, provenance, nutritional value, weight etc. of the product.

According to possible forms of embodiment of the present invention, the packing step 16 of the food product can comprise, as well as packing the food product in a pack, the packing of the packs in secondary packs in order to identify the food product for example.

In accordance with the present invention, the method 10 comprises a step 20 of preserving the food products at a temperature comprised between 0 and 4°C, preferably at a temperature comprised between 0 and 1°C.

Respecting these temperature values of the food product avoids the possibility of freezing the food product, and therefore guarantees that the organoleptic properties of the food products are maintained.

Moreover, keeping the temperature at no more than the range of temperatures indicated above allows to preserve the preservation characteristics of the food product.

According to possible solutions, the preservation step 20 can also occur at the same time as the transport step of the food product, for example on its way to distribution to various shops, supermarkets, bars etc.

During the preservation step 20 a substantially continuous, direct or indirect, detection of the temperature of the food product can be provided.

Merely by way of example, and in accordance with a possible variant form of embodiment of the present invention, a device to detect the temperature over time can be associated to the pack of the food product; such devices, also known as data loggers, are configured to detect and memorize data relating to the temperatures of the pack, for example during transport.

The data memorized can be transmitted to and processed by electronic devices, a smartphone for example, in order to verify that the temperature values during the preservation step 20 have been respected.

The preservation step 20 can occur in a preservation station that, merely by way of example, can comprise at least one of either a cold store, a food transport vehicle or suchlike.

It is clear that modifications and/or additions of parts may be made to the apparatus for processing a food product as described heretofore, without departing from the field and scope of the present invention as presented in the appended claims.

It is also clear that, although the present invention has been described with reference to some specific examples, a person of skill in the art shall certainly be able to achieve many other equivalent forms of apparatus for processing a food product, having the characteristics as set forth in the claims and hence all coming within the field of protection defined thereby.

## Claims

1. Method for processing food products for obtaining a ready-made food product, said method comprising:
- a step (12) of preparing a food product during which one or more raw materials, which constitute the food product to be obtained, are worked;
- a low temperature cooking step (14) during which the food product previously processed during the preparation step (12) is cooked in vacuum mode;
- a cold pasteurization step (18) during which the food product is subjected to a pressure of at least 3,000bar, wherein during said cold pasteurization step (18) the food product does not exceed a temperature close to room temperature;
- a packing step (16) during which the food product is put in a pack;
- a step (20) of preserving the food products at a temperature comprised between 0 and 4°C.

2. Method as in claim 1, **characterized in that** before said cooking step (14) it provides an operation of putting the food into a container.

3. Method as in claim 1 or 2, **characterized in that** said cooking step (14) comprises a cooking operation made in at least one of either a convection steam oven or an instrument equipped with a resistance, a thermostat and a fan.

4. Method as in any claim hereinbefore, **characterized in that** during the cooking step (14) the food product is kept in a vacuum condition comprised between 0.2bar and 0.5bar.

5. Method as in any claim hereinbefore, **characterized in that** the packing step (16) is carried out before the cooking step (14).

6. Method as in any of the claims from 1 to 4, **characterized in that** the packing step (16) is carried out before the cold pasteurization step (18) and after the cooking step (14).

7. Method as in any of the claims from 1 to 4, **characterized in that** the packing step (16) is carried out after the cooking step (14) and after the cold pasteurization step (18).

8. Method as in any claim hereinbefore, **characterized in that** during said preserving step (20) it provides a continuous, direct or indirect detection of the temperature of the food product.

9. Apparatus for processing food products for obtaining a ready-made food product, according to a method as in any claims from 1 to 8, said apparatus comprising:
- a preparation station of a food product, configured to work one or more raw materials that make up the food product to be obtained;
- a low temperature cooking station configured to cook said food product in vacuum mode;
- a cold pasteurization station configured to put said food product at a pressure of at least 3,000bar, wherein during said cold pasteurization step (18) the food product does not exceed a temperature close to room temperature;
- a packing station configured to pack said food product;
- a preservation station configured to preserve said food product at a temperature comprised between 0 and 4°C.

## Patentansprüche

1. *Verfahren zur Bearbeitung von Nahrungsmittelprodukten zum Erhalt eines Fertignahrungsmittelprodukts, wobei das Verfahren umfasst:*
- *einen Schritt (12) zur Herstellung eines Nahrungsmittelprodukts, währenddessen ein oder mehr Rohmaterial(ien), welche*/*s das zu erhaltende Nahrungsmittelprodukt darstellt*/*en, bearbeitet werden;*
- *einen Niedrigtemperaturkochschritt (14), währenddessen das Nahrungsmittelprodukt, das zuvor während des Herstellungsschritts (12) bearbeitet worden ist, in einem Vakuummodus gekocht wird;*
- *einen Kaltpasteurisierungsschritt (18), währenddessen das Nahrungsmittelprodukt einem Druck von mindestens 3000 bar unterzogen wird, wobei während dieses Kaltpasteurisierungsschritts (18) das Nahrungsmittelprodukt eine Temperatur, die nahe bei der Raumtemperatur liegt, nicht übersteigt;*
- *einen Verpackungsschritt (16), währenddessen das Nahrungsmittelprodukt in eine Verpackung gepackt wird;*
- *einen Schritt (20) zur Haltbarmachung der Nahrungsmittelprodukte bei einer Temperatur zwischen o bis 4°C.*

2. *Verfahren nach Anspruch 1, **dadurch gekennzeichnet, dass** vor dem Kochschritt (14) eine Behandlung durch Einsetzen des Nahrungsmittels in einen Container erfolgt.*

3. *Verfahren nach Anspruch 1 oder 2, **dadurch gekennzeichnet, dass** der Kochschritt (14) eine Kochbehandlung umfasst, die mindestens in einem von einem Konvektionsdampfofen oder einer Vorrichtung, die mit einem Widerstand, einem Thermostat und einem Ventilator ausgestattet ist, erfolgt.*

4. *Verfahren nach einem der vorgenannten Ansprüche, **dadurch gekennzeichnet, dass** während des Kochschritts (14) das Nahrungsmittelprodukt unter Vakuumbedingungen von 0,2 bis 0,5 bar gehalten wird.*

5. *Verfahren nach einem der vorgenannten Ansprüche, **dadurch gekennzeichnet, dass** der Verpackungsschritt (16) vor dem Kochschritt (14) ausgeführt wird.*

6. *Verfahren nach einem der Ansprüche 1 bis 4, **dadurch gekennzeichnet, dass** der Verpackungsschritt (16) vor dem Kaltpasteurisierungsschritt (18) und nach dem Kochschritt (14) ausgeführt wird.*

7. *Verfahren nach einem der Ansprüche 1 bis 4, **dadurch gekennzeichnet, dass** der Verpackungsschritt (16) nach dem Kochschritt (14) und nach dem Kaltpasteurisierungsschritt (18) ausgeführt wird.*

8. *Verfahren nach einem der vorgenannten Ansprüche, **dadurch gekennzeichnet, dass** während des Haltbarmachungsschritts (20) eine kontinuierliche, direkte oder indirekte Detektion der Temperatur des Nahrungsmittelprodukts erfolgt.*

9. *Apparatur zur Prozessierung von Nahrungsmittelprodukten zum Erhalt eines Fertignahrungsmittelprodukts nach einem Verfahren wie in einem der Ansprüche 1 bis 8 definiert, wobei die Apparatur umfasst:*
- *eine Herstellungsstation eines Nahrungsmittelprodukts, die ausgelegt ist, ein oder mehr Rohmaterial(ien), die das zu erhaltende Nahrungsmittelprodukt darstellen, zu bearbeiten;*
- *eine Niedrigtemperaturkochstation, die ausgelegt ist, das Nahrungsmittelprodukt in einem Vakuummodus zu kochen;*
- *eine Kaltpasteurisierungsstation, die ausgelegt ist, das Nahrungsmittelprodukt einem Druck von mindestens 3000 bar auszusetzen, wobei während des Kaltpasteurisierungsschritts (18) das Nahrungsmittelprodukt eine Temperatur, die nahe der Raumtemperatur liegt, nicht übersteigt;*
- *eine Verpackungsstation, die ausgelegt ist, das Nahrungsmittelprodukt zu verpacken;*
- *eine Haltbarmachungsstation, die ausgelegt ist, das Nahrungsmittelprodukt bei einer Temperatur von o bis 4°C haltbar zu machen.*

## Revendications

1. Méthode de traitement de produits alimentaires pour obtenir un produit alimentaire prêt à l'emploi, ladite méthode comprenant :
- une étape (12) de préparation d'un produit alimentaire au cours de laquelle une ou plusieurs matières premières, qui constituent le produit alimentaire à obtenir, sont travaillées ;
- une étape de cuisson basse température (14) au cours de laquelle le produit alimentaire préalablement traité au cours de l'étape de préparation (12) est cuit en mode sous vide ;
- une étape de pasteurisation à froid (18) au cours de laquelle le produit alimentaire est soumis à une pression d'au moins 3000 bars, au cours de laquelle, dans laquelle au cours de ladite étape de pasteurisation à froid (18), le produit alimentaire ne dépasse pas une température proche de la température ambiante ;
- une étape de conditionnement (16) au cours de laquelle le produit alimentaire est placé dans un conditionnement ;
- une étape (20) de conservation des produits alimentaires à une température comprise entre 0 et 4°C.

2. Méthode selon la revendication 1, **caractérisée en ce qu'**avant ladite étape de cuisson (14) est prévue une opération consistant à mettre les aliments dans un conteneur.

3. Méthode selon la revendication 1 ou 2, **caractérisée en ce que** ladite étape de cuisson (14) comprend une opération de cuisson réalisée dans au moins un four à vapeur et convection ou un instrument équipé d'une résistance, d'un thermostat et d'un ventilateur.

4. Méthode selon l'une quelconque des revendications précédentes, **caractérisée en ce que** pendant l'étape de cuisson (14), le produit alimentaire est maintenu dans un état de vide compris entre 0,2 bar et 0,5 bar.

5. Méthode selon l'une quelconque des revendications précédentes, **caractérisé en ce que** l'étape de conditionnement (16) est effectuée avant l'étape de cuisson (14).

6. Méthode selon l'une quelconque des revendications 1 à 4, **caractérisé en ce que** l'étape de conditionnement (16) est effectuée avant l'étape de pasteurisation à froid (18) et après l'étape de cuisson (14).

7. Méthode selon l'une quelconque des revendications 1 à 4, **caractérisé en ce que** l'étape de conditionnement (16) est réalisée après l'étape de cuisson (14) et après l'étape de pasteurisation à froid (18).

8. Méthode selon l'une quelconque des revendications précédentes, **caractérisé en ce qu'**au cours de ladite étape de conservation (20) est prévue une détection pratiquement continue, directe ou indirecte de la température du produit alimentaire.

9. Appareil de traitement de produits alimentaires pour obtenir un produit alimentaire prêt à l'emploi conformément à une méthode selon l'une quelconque des revendications 1 à 8, ledit appareil comprenant :
- un poste de préparation d'un produit alimentaire, configuré pour travailler une ou plusieurs matières premières qui composent le produit alimentaire à obtenir ;
- un poste de cuisson basse température configuré pour cuire ledit produit alimentaire en mode sous vide ;
- un poste de pasteurisation à froid configuré pour mettre ledit produit alimentaire à une pression d'au moins 3 000 bars, dans lequel au cours de ladite étape de pasteurisation à froid (18), le produit alimentaire ne dépasse pas une température proche de la température ambiante ;
- un poste de conditionnement configuré pour conditionner ledit produit alimentaire ;
- un poste de conservation configuré pour conserver ledit produit alimentaire à une température comprise entre 0 et 4°C.
